# EUROPÄISCHE PATENTSCHRIFT

(11) **EP 2 682 626 B1**
(45) Veröffentlichungstag und Bekanntmachung des Hinweises auf die Patenterteilung: **27.05.2015**
(21) Anmeldenummer: 13173644.9
(22) Anmeldetag: 25.06.2013
(51) Int. Cl.: F16D 13/75

(54) **Nachstelleinrichtung für eine Reibungskupplung und entsprechende Reibungskupplung**
Adjustment device for a friction clutch and corresponding friction clutch
Dispositif de compensation pour un accouplement à friction et accouplement à friction correspondant

(30) Priorität: 02.07.2012 DE 102012211412
(43) Veröffentlichungstag der Anmeldung: 08.01.2014
(73) Patentinhaber: Schaeffler Technologies AG & Co. KG, 91074 Herzogenaurach (DE)
(72) Erfinder: Ahnert, Gerd, 77880 Sasbach (DE)

(56) Entgegenhaltungen:
- DE-A1-102011 010 340
- DE-A1-102011 107 087
- DE-A1-102012 216 072

## Beschreibung

Die Erfindung betrifft eine Nachstelleinrichtung für eine Reibungskupplung eines Kraftfahrzeugs, mit dessen Hilfe ein verschleißbedingter Fehlabstand einer Anpressplatte zu einer Gegendruckplatte der Reibungskupplung zum Verpressen einer Kupplungsscheibe zwischen der Anpressplatte und der Gegendruckplatte nachgestellt werden kann. Die Erfindung betrifft weiterhin eine Reibungskupplung mit einer erfindungsgemäßen Nachstelleinrichtung.

Eine Reibungskupplung mit einer weggesteuerten Nachstelleinrichtung ist beispielsweise aus DE 10 2009 035 225 A1 bekannt, bei der eine sich in Abhängigkeit vom Abstand eines Betätigungssystems mit einer Tellerfeder und einer Anpressplatte axial verlagernde Antriebsklinke auf ein Ritzel einer Spindel wirkt, wobei eine auf der Spindel aufgenommene Spindelmutter bei Verdrehung der Spindel einen zwischen der Anpressplatte und der Tellerfeder angeordneten Rampenring eines Rampensystems relativ zu einer Gegenrampe der Anpressplatte verdreht, wodurch der ursprüngliche Abstand des Betätigungssystems zur Anpressplatte wieder hergestellt wird. Dabei gleitet während des Hubs einer Gegendruckplatte gegenüber der Anpressplatte die Antriebsklinke auf den Zähnen des Ritzels und rastet bei einem vorgegebenen Verschleiß in eine Zahnlücke zwischen zwei Zähnen ein. Die Antriebsklinke nimmt beim nächsten Öffnungsvorgang der Reibungskupplung das Ritzel formschlüssig mit und verdreht dabei das Ritzel und damit die Spindel, wodurch die Spindelmutter entlang der Spindel bewegt wird und den Rampenring um einen entsprechenden Winkelbetrag verdreht, um die Reibungskupplung dadurch nachzustellen. Durch Schwingungen der Anpressplatte kann die Nachstellgenauigkeit der Reibungskupplung beeinträchtigt werden. Zudem ist die Montage der Reibungskupplung aufwändig.

Eine weitere Reibungskupplung ist aus der DE 10 2011 107 087 bekannt. Es ist daher Aufgabe der vorliegenden Erfindung, eine Nachstelleinrichtung für eine Reibungskupplung bereitzustellen, die in einem großen Verschleißbereich eine verbesserte Nachstellgenauigkeit ermöglicht. Es ist weiterhin die Aufgabe der Erfindung eine einfachere Montage der Reibungskupplung mit einer Nachstelleinrichtung zu ermöglichen.

Die Lösung der Aufgabe erfolgt erfindungsgemäß durch die Merkmale des Anspruchs 1. Bevorzugte Ausgestaltungen der Erfindung sind in den Unteransprüche angegeben.

Die erfindungsgemäße Nachstelleinrichtung für eine Reibungskupplung eines Kraftfahrzeugs, mit einem mit einer Spindel verbundenem Ritzel zur Nachstellung eines verschleißbedingten Fehlabstandes über einen Verstellring und eine Gegenrampe zwischen einer Gegendruckplatte und einer relativ zu der Gegendruckplatte bewegbaren Anpressplatte zum Verpressen einer Kupplungsscheibe zwischen der Anpressplatte und der Gegendruckplatte, einem Betätigungselement zum Bewegen der Anpressplatte relativ zu der Gegendruckplatte, einem drehbar anpressplattenseitig angeordneten Antriebshebel, mit einer in das Ritzel eingreifenden Antriebsklinke zum Drehen des Ritzels, einer auf den Antriebshebel wirkenden Vorspanneinrichtung mit mindestens einem Energiespeicher zum vorspannenden Verschwenken des Antriebshebels. Erfindungsgemäß ist ein mit dem Antriebshebel und dem Betätigungselement verbundenes Koppelelement vorgesehen, wobei der Antriebshebel über das Koppelelement mit dem Betätigungselement in Wirkverbindung bringbar ist.

Auf die Spindel kann eine Spindelmutter aufgeschraubt sein, wobei die Spindelmutter mit einem in Umfangsrichtung relativ an einer Gegenrampe der Anpressplatte abgleitenden Verstellring zur Nachstellung des verschleißbedingten Fehlabstands der Anpressplatte zur Gegendruckplatte verbunden sein kann. Das Betätigungselement kann an dem Verstellring zum Bewegen der Anpressplatte in Richtung der Gegendruckplatte abstützbar gelagert sein. Mit Hilfe der Nachstelleinrichtung kann insbesondere ein in Umfangsrichtung relativ auf einer Gegenrampe abgleitender Verstellring relativ zu einer entsprechenden Gegenrampe verstellt werden. Der Antriebshebel kann anpressplattenseitig insbesondere relativ drehbar zur Spindel und relativ drehbar zum Ritzel an der Spindel gelagert sein, wobei die Antriebsklinke mit dem Antriebshebel verbunden sein kann. Die Nachstelleinrichtung, insbesondere die Spindel, der Antriebshebel, die Antriebsklinke, die Vorspanneinrichtung sowie der Verstellring der Nachstelleinrichtung, können an der Anpressplatte angeordnet sein. Der Antriebshebel kann in Form eines Freilaufhebels ausgestaltet sein, wobei die Antriebsklinke im Eingriff mit dem Ritzel sein kann. Der Antriebshebel in Form eines Freilaufhebels ermöglicht die Übertragung eines Momentes in eine Richtung. Der Antrieb des Antriebshebels erfolgt durch eine Koppelung des Antriebshebels mit dem Betätigungselement durch ein Koppelelement, wobei durch die Koppelung eine Wegübersetzung zwischen der Bewegung des Betätigungselementes und der Bewegung des Antriebshebels erfolgen kann. Das Koppelelement kann beispielsweise in Form eines Klammer oder einer Klips-Verbindung ausgestaltet sein, welche formschlüssig mit dem Antriebshebel und dem Betätigungselement verbindbar sein kann. Der Antriebshebel kann kippbar gelagert sein. Die Antriebsklinke kann an dem Antriebshebel angeordnet sein, wobei die Antriebsklinke bei einem Einrücken der Reibungskupplung durch Überspringen einer Zahnspitze des Ritzels den vorliegenden Kupplungsverschleiß sensieren kann, und die bei einem anschließenden Ausrücken der Reibungskupplung durch Drehung des Antriebsritzels den Verschleiß nachstellen kann. Auf den Antriebshebel kann über eine Vorspanneinrichtung eine Vorspannung einwirken, welche beispielsweise einer Bewegungsrichtung durch das Koppelelement entgegengerichtet wirken kann und nach einer Bewegung des Antriebshebels durch das Koppelelement eine Rückstellbewegung des Antriebshebels bewirken kann. Die Vorspanneinrichtung, insbesondere ein Energiespeicher der Vorspanneinrichtung, kann durch ein Kippen des Antriebshebels beim Einrücken der Reibungskupplung vorgespannt werden, wobei die Vorspanneinrichtung, insbesondere der Energiespeicher, an der Anpressplatte oder an einem anpressplattenfesten Bauteil abgestützt sein kann. Bei einem Ausrücken der Reibungskupplung kann der sich entspannende Energiespeicher der Vorspanneinrichtung die Verschleißnachstellung bewirken, so dass die Nachstellung bei dem Ausrücken der Reibungskupplung und bei einem Abhub der Anpressplatte einer Betätigungskraft des Betätigungselementes nicht entgegenwirkt.

Dadurch, dass die Antriebsklinke über den Antriebshebel durch das Koppelelement betätigbar ist, können die Eingriffsverhältnisse der Antriebsklinke relativ zum Ritzel über die Lebensdauer der Reibungskupplung entlang des gesamten Verschleißbereichs im Wesentlichen konstant gehalten werden. Ein sich verändernden Hebelarm oder sich verändernde Kraftrichtungen, welchen die Antriebsklinke aus dem Zahnzwischenraum des Ritzels herausdrücken würden, können dadurch vermieden werden. Dadurch können die Bewegungsverhältnisse an dem Antriebshebel, insbesondere an dem Freilaufhebel, über den Verschleißweg im Wesentlichen konstant bleiben, wodurch die Funktionssicherheit erhöht werden kann. Gleichzeitig kann über den Antriebshebel eine Übersetzung oder Untersetzung der Bewegung der Antriebsklinke zur Bewegung des Koppelelementes ermöglicht werden, so dass in Abhängigkeit der von dem Antriebshebel bereitgestellten Hebelübersetzung die Dimensionierung des Ritzels an die gewünschte Auflösung der Nachstelleinrichtung angepasst werden kann. Dadurch können beispielsweise die Bauteile robuster gestaltet werden, die Zahnteilung kann vergrößert werden, und/oder die Zahnform kann widerstandsfähiger ausgebildet werden. Dies ermöglicht auch bei engen Bauraumverhältnissen eine hochauflösende und genaue Nachstellung der Anpressplatte bei einer verschleißbedingten Änderung des Hubwegs der Anpressplatte. Insbesondere ist es möglich, eine radiale Vorspannung der Antriebsklinke auf das Ritzel zu reduzieren oder sogar zu eliminieren, sodass unnötige Reibungsverluste vermieden werden können. Da die kinematischen Verhältnisse der Antriebsklinke zu dem Ritzel im Wesentlichen konstant bleiben, ist es für einen ordnungsgemäßen Betrieb der Nachstelleinrichtung ausreichend, wenn das Koppelelement über den gesamten Verschleißbereich an dem Antriebshebel angreifen kann, um über die von dem Koppelelement auf den Antriebshebel aufgebrachte Kraft mit Hilfe der Antriebsklinke das Ritzel zu verdrehen. Ein besonderer Vorteil ist aber die vergrößerte Sicherheit gegen ungewollte Nachstellschritte bei Axialschwingungen der Anpressplatte, da nur bei Betriebspunktlage des Betätigungselementes eine Verschleißsensierung erfolgen kann. Eine ungewollte Verschleißsensierung bei Abhublage der Anpressplatte können vermieden werden, wodurch die Nachstellgenauigkeit über einen großen Verschleißbereich verbessert werden kann. Zudem ist die Kraftwirkung der Nachstelleinrichtung im Wesentlichen in sich geschlossen und wirkt nicht gegen Betätigungskraft des Betätigungselementes der Anpressplatte. Durch die Vergrößerung des Relativweges an dem Antriebshebel, insbesondere an der Antriebsklinke und dem Ritzel, kann die Relation des Relativweges am Antriebshebel gegenüber den Störgrößen, beispielsweise Verlagerungen der Anpressplatte durch axialen Schwingungen, verbessert werden, wodurch eine geringe Streuung der Betriebspunktlage erreicht werden kann, was eine konstantere Nachstellung ermöglicht. Durch die Vergrößerung des Relativweges am Antriebshebel, insbesondere dem Nachstellfreilauf, gegenüber dem Abhubweg kann die Robustheit und Zuverlässigkeit der Nachstelleinrichtung verbessert werden. Eine ungewollte Nachstellung der Nachstelleinrichtung bei Axialschwingungen der Anpressplatte kann durch die Vergrößerung des Relativweges durch das radial innenseitige Koppeln des Antriebshebels mit dem Betätigungselement vermieden werden. Ein zusätzlicher Vorteil der erfindungsgemäßen Nachstelleinrichtung ist, dass die Nachstelleinrichtung im Wesentlichen vollständig an der Anpressplatte angeordnet ist, wodurch ein Deckel der Nachstelleinrichtung vereinfacht werden kann. Zudem kann der benötigte Bauraum der Nachstelleinrichtung verringert werden. Eine Montage der Reibungskupplung kann ebenfalls vereinfacht werden, da die Nachstelleinrichtung, beispielsweise die Antriebsklinke, Antriebshebel, Spindel und Ritzel, bereits vollständig an der Anpressplatte vormontiert sein können. Die erfindungsgemäße Nachstelleinrichtung hat weiterhin den Vorteil, dass eine Prüfung der Funktion der Nachstelleinrichtung vor Abschluss der Montage der Reibungskupplung einfach durchführbar ist.

In einer bevorzugten Ausgestaltung der Erfindung ist das Koppelelement radial innenseitig des Verstellringes und/oder radial innenseitig einer Lagerung des Betätigungselementes angeordnet. Durch die radial innenseitige Anordnung des Koppelelementes kann die Montage des Koppelelementes an dem Betätigungselement, beispielsweise durch eine Öffnung eines Kupplungsgehäuses der Reibungskupplung hindurch, vereinfacht werden. Zudem kann durch die radial innenseitige Anordnung ein radial innenseitig größerer Betätigungsweg des Betätigungselementes zur Vergrößerung des Betätigungsweges des Antriebshebels genutzt werden, wodurch beispielsweise die Störanfälligkeit der Verschleißnachstellung gegenüber Axialschwingungen der Anpressplatte verringert werden kann.

Gemäß einer bevorzugten Ausgestaltung der Erfindung sind der Antriebshebel und die Spindel radial innenseitig des Verstellringes und/oder radial innenseitig der Lagerung des Betätigungselementes angeordnet. Durch die radial innenseitige Anordnung kann der benötigte Bauraum der Nachstelleinrichtung verringert werden. Zudem kann der Durchmesser des Verstellringes vergrößert werden, wodurch beispielsweise die Anzahl der Rampen und Gegenrampen zur Nachstellung eines Verschleißes vergrößert werden kann, wobei die kontaktflächen vergrößert und die Reibkräfte verringert werden können.

Gemäß einer weiteren bevorzugten Ausgestaltung der Erfindung ist das Betätigungselement eine Tellerfeder, insbesondere mit nach radial innen gerichteten Tellerfederzungen. Das Koppelelement kann radial innenseitig mit mindestens einer Tellerfeder verbunden sein, wodurch der Antrieb des Antriebshebels, des Freilaufhebels, durch die Koppelung zu den Tellerfederzungen erfolgt. Die Tellerfederzungen können sich bei zunehmendem Verschleiß weiter aufstellen und damit den Angriffspunkt des Koppelelementes weiter axial verlagern als beispielsweise ein radial innenliegender Rand einer Tellerfeder, wodurch ein größerer Relativweg am Antriebshebel genutzt werden kann. Zudem kann die gegenläufige Axialbewegung des Tellerfederkraftrandes und der Tellerfederzungen vorteilhaft genutzt werden, wodurch zum Beispiel die Relation des Relativweges am Antriebshebel gegenüber Störgrößen, beispielsweise Bauteiltoleranzen, Lagerspiele oder Axialschwingungen, verbessert werden kann.

Gemäß noch einer weiteren bevorzugten Ausgestaltung der Erfindung ist vorgesehen, dass der Antriebshebel einen ersten Schenkel zur Kraftaufnahme einer von dem Koppelelement aufgeprägten Kraft und einen mit der Antriebsklinke und/oder der Vorspanneinrichtung verbundenen zweiten Schenkel aufweist. Der erste Schenkel zur Kraftaufnahme einer von dem Koppelelement aufgeprägten Kraft und der mit der Antriebsklinke und/oder der Vorspanneinrichtung verbundene zweite Schenkel können auf einer gemeinsamen Mittellinie angeordnet sein. Der erste und der zweite Schenkel können eine unterschiedliche Länge aufweisen, wodurch ein Übersetzungsverhältnis zwischen der Bewegung des Koppelelementes und der Antriebsklinke und/oder Vorspanneinrichtung einstellbar ist.

Vorzugsweise ist der Antriebshebel an einer Spindelhalterung der Spindel gelagert. Der Antriebshebel kann kippbar an der Spindelhalterung angeordnet sein. Der Antriebshebel kann beispielsweise mit Spielpassung auf die Spindel aufgesteckt werden und gegebenenfalls an einer axialen Seite oder an beiden axialen Seiten mit einem Sicherungsring in axialer Richtung gesichert werden. Insbesondere ist der Antriebshebel an einer axialen Seite durch das Ritzel begrenzt.

Gemäß einer bevorzugten Ausgestaltung der Erfindung ist vorgesehen, dass die Vorspanneinrichtung eine Federeinrichtung mit mindestens einem Federelement als Energiespeicher aufweist. Das mindestens eine Federelement kann eine Druckfeder sein. Der Energiespeicher, insbesondere das Federelement, kann zwischen dem Antriebshebel und der Anpressplatte angeordnet sein, wobei der Antriebshebel durch das Koppelelement bei zunehmendem Verschleiß und damit zunehmender axialer Verlagerung des Betätigungselementes der Energiespeicher komprimiert werden kann. Bei einer Ausrückbewegung der Reibungskupplung, bei der die Anpressplatte von der Gegendruckplatte weg verlagert wird, kann die Vorspanneinrichtung mittels des Energiespeichers eine Rückstellbewegung des Antriebshebels bewirken, wobei eine Nachstellung eines sensierten Verschleißes über die Antriebsklinke erfolgen kann. Das Koppelelement wird bei einer Ausrückbewegung, bei der die Reibungskupplung geöffnet wird, in Richtung der Anpressplatte bewegt, wodurch der Antriebshebel von einer Zugkraft des Koppelelementes entlastet werden kann.

Gemäß einer weiteren bevorzugten Ausgestaltung der Erfindung ist eine Rückdrehsperre vorgesehen. Die Rückdrehsperre kann ein Zurückdrehen des Ritzels und der Spindel entgegen einer Verschleißnachstellbewegung durch die Antriebsklinke verhindern. Die Rückdrehsperre kann auf das Ritzel und/oder die Spindel wirken und kann beispielsweise in Form einer in das Ritzel formschlüssig eingreifbaren Sperrklinke und/oder einer kraftschlüssigen Reibkupplung ausgebildet sein.

Die Erfindung betrifft ferner eine Reibungskupplung umfassend mindestens eine wie vorstehend aus- und weitergebildete Nachstelleinrichtung. Die erfindungsgemäße Nachstelleinrichtung für eine Reibungskupplung ermöglicht in einem großen Verschleißbereich eine verbesserte Nachstellgenauigkeit sowie eine einfachere Montage der Reibungskupplung mit einer Nachstelleinrichtung

Nachfolgend wird die Erfindung unter Bezugnahme auf die anliegenden Zeichnungen anhand bevorzugter Ausführungsbeispiele exemplarisch erläutert.

Es zeigen:
- Fig. 1:: eine schematische Schnittansicht einer Nachstelleinrichtung gemäß einer ersten Ausführungsform der Erfindung;
- Fig. 2a:: eine schematische Schnittansicht der Nachstelleinrichtung aus Fig. 1 in einer Betriebspunktlage;
- Fig. 2b:: eine schematische Schnittansicht einer Nachstelleinrichtung gemäß Fig. 2 in einem ausgerückten Zustand;
- Fig. 3:: eine schematische Schnittansicht der Bauteile der Nachstelleinrichtung gemäß Fig. 1;
- Fig. 4:: eine schematische Schnittansicht einer Nachstelleinrichtung mit einem alternativen Antrieb des Antriebshebels.

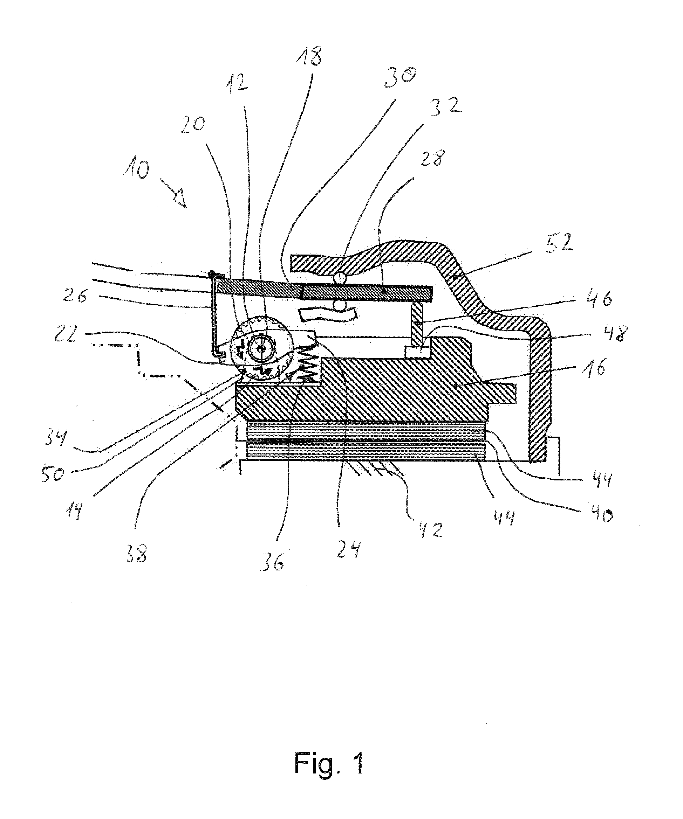

Die in Fig. 1 dargestellte Nachstelleinrichtung 10 für eine Reibungskupplung eines Kraftfahrzeugs weist ein mit einer Spindel 12 eines Spindeltriebs verbundenes Ritzel 14 auf, wobei der Spindeltrieb auf einer Anpressplatte 16 angeordnet ist. Mit der Spindel 12 ist ein relativ zu der Spindel 12 und relativ zu dem Ritzel 14 um eine Drehachse 18 der Spindel 12 drehbarer Antriebshebel 20 verbunden. Der Antriebshebel 20 ist als Freilaufhebel ausgebildet und weist einen ersten Schenkel 22 und einen zweiten Schenkel 24 auf. Über ein Koppelelement 26 ist der erste Schenkel 22, insbesondere der Endbereich des ersten Schenkels 22, mit einem Betätigungselement 28 wirkverbunden. Das Betätigungselement 28 zur Betätigung der Reibungskupplung ist in Form einer Tellerfeder mit radial nach innengerichteten Tellerfederzungen 30 ausgebildet, wobei das Betätigungselement 28 in einer Lagerung 32 kippbar gelagert ist. Das Koppelelement 26 ist radial innenseitig an mindestens einer Tellerfederzunge 30 angeordnet und kann bei zunehmendem Verschleiß der Reibungskupplung eine axiale Aufstellbewegung der Tellerfederzunge 30 auf den Antriebshebel 20 übertragen. An dem Antriebshebel 20, insbesondere an dem ersten 22 oder zweiten Schenkel 24, kann eine in eine Umfangsverzahnung 34 des Ritzels 14 eingreifende Antriebsklinke (nicht dargestellt) zur Verdrehung des Ritzels 14 angeordnet sein.

Zwischen dem zweiten Schenkel 24 des Antriebshebels 20 und der Anpressplatte 16 ist eine mindestens einen Energiespeicher 36 aufweisende Vorspanneinrichtung 38 angeordnet, welche den als Freilaufhebel ausgebildeten Antriebshebel 20 gegenüber der Anpressplatte 16 elastisch vorspannen kann. Der Energiespeicher 36 ist in Form einer Druckfeder ausgebildet. Die entsprechende Vorspanneinrichtung 38 mit einer Druck- oder einer sonstigen Feder ist somit eine Federeinrichtung. Der Energiespeicher 36 der Vorspanneinrichtung 38 kann bei zunehmendem Verschleiß der Reibungskupplung und einer entsprechend zunehmenden axialen Aufstellung des Betätigungselementes 28,30, welche auf den Antriebshebel 20 übertragen wird, durch die Bewegung des Antriebshebels 20 komprimiert werden, wodurch Energie gespeichert werden kann. Bei einem hinreichenden Verschleiß der Reibungskupplung kann sich das Betätigungselement 28, insbesondere die Tellerfederzungen 30, stärker in axialer Richtung aufstellen, damit eine Kupplungsscheibe 40 bei einem Schließen der Reibungskupplung reibschlüssig zwischen der Anpressplatte 16 und einer der Anpressplatte 16 gegenüberliegenden Gegendruckplatte 42 zwischen Reibbelägen 44 geklemmt werden kann. Das Koppelelement 26 überträgt die axiale Bewegung des Betätigungselementes 28 auf den Antriebshebel 20, wodurch der Energiespeicher 36 vorgespannt werden kann. Eine Antriebsklinke (nicht dargestellt), die an dem Antriebshebel 20 befestigt ist, kann bei einem hinreichenden Verschleiß eine Zahnspitze der Umfangsverzahnung 34 des Ritzels 14 überspringen und formschlüssig in einen benachbarten Zahn der Umfangsverzahnung 34 eingreifen. Bei einem Ausrücken oder Öffnen der Reibungskupplung wird das Koppelelement 26 entlastet und der Energiespeicher 36 kann den Antriebshebel 20 in eine Ausgangslage zurückbewegen. Dabei kann die Antriebsklinke durch die Vorspanneinrichtung 38 eine Kraft formschlüssig in Umfangsrichtung auf das Ritzel 14 aufbringen und zusammen mit dem Ritzel 14 die Spindel 12 verdrehen, wodurch eine auf der Spindel 12 angeordnete Spindelmutter (nicht dargestellt) translatorisch bewegt werden kann.

Die Spindelmutter kann in einen anpressplattenseitig angeordneten Verstellring 46 eingreifen, wodurch der Verstellring 46 im Wesentlichen klemmkraftfrei relativ zu mindestens einer Gegenrampe 48 an der Anpressplatte 16 zur Verschleißnachstellung verdreht werden kann. Dadurch kann die mit dem Ritzel 14 verbundene Anpressplatte 16 näher an die Gegendruckplatte 42 der Reibungskupplung bewegt werden, sodass ein verschleißbedingter, sich vergrößernder Hubweg der Anpressplatte 16 relativ zu der Gegendruckplatte 42 durch eine Nachstellung der Anpressplatte 16 in Richtung der Gegendruckplatte 42 verringert werden kann. Eine Rückdrehung des Ritzels 14 kann durch eine Rückdrehsperre (nicht dargestellt), beispielsweise in Form einer an der Anpressplatte angeordneten formschlüssigen Sperrklinke oder einer kraftschlüssigen Reibsperre, verhindert werden. Die Nachstelleinrichtung 10, insbesondere die Spindel 12 mit dem Antriebshebel 20, ist radial innenseitig des Verstellringes 46 und der Lagerung 32 des Betätigungselementes 28 angeordnet. Das Koppelelement 26 ist ebenfalls radial innenseitig des Verstellringes 46 und der Lagerung 32 des Betätigungselementes 28 angeordnet. Der Antriebshebel 20 ist an einer Spindelhalterung 50 kippbar angeordnet. Die Nachstelleinrichtung 10 ist im Wesentlichen innerhalb eines Kupplungsdeckels 52 angeordnet.

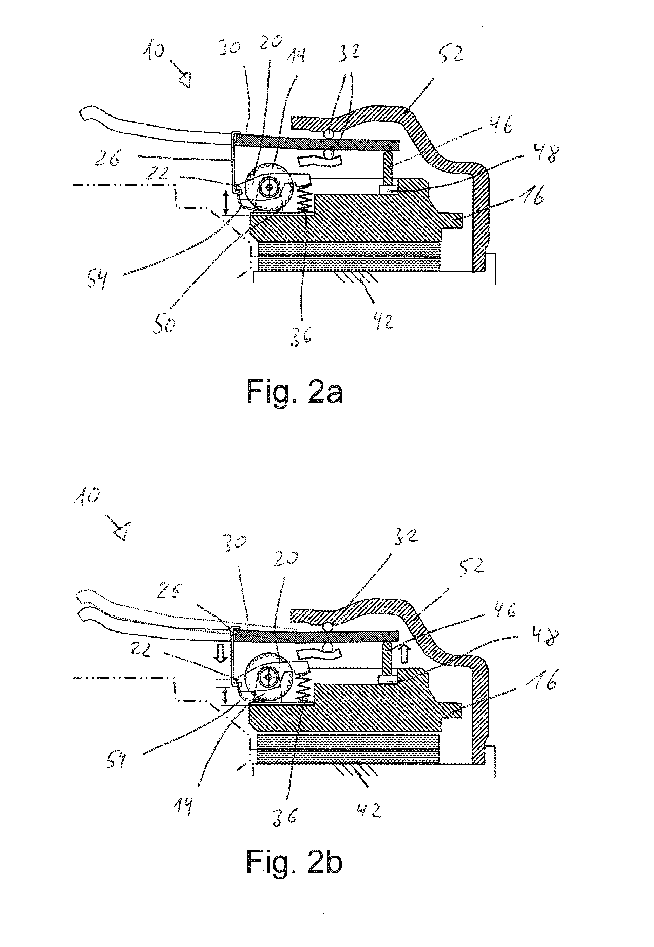

In Fig. 2a ist die Nachstelleinrichtung 10 einer Reibungskupplung in einem geschlossenen Zustand in einer Betriebspunktlage dargestellt, in der die Kupplungsscheibe 40 zwischen den Reibbelägen 44 der Anpressplatte 16 und der Gegendruckplatte 42 verklemmt ist, wobei die Anpressplatte 16 über den Verstellring 46 durch das Betätigungselement 28 mit einer axialen Kraft in Richtung der Gegendruckplatte 42 beaufschlagt wird. An dem ersten Schenkel 22 des Antriebshebels 20 ist die Antriebsklinke 54 angeordnet, welche endseitig an dem ersten Schenkel 22 befestigt ist und sich anpressplattenseitig bis zur Umfangsverzahnung 34 des Ritzels 14 erstreckt. Ein erster Abstand in der Betriebspunktlage zwischen dem an dem ersten Schenkel 22 des Antriebshebels 20 angreifenden Koppelelementes 26 und der Anpressplatte 16 ist als Pfeil dargestellt. Bei zunehmendem Verschleiß der Reibungskupplung kann der erste Abstand durch ein axiales Aufstellen des Betätigungselementes 28, insbesondere der Tellerfederzungen 30, weiter vergrößert werden, wodurch über den Antriebshebel 20 in den Energiespeicher 36 der Vorspanneinrichtung 38 Energie eingebracht werden kann. Bei einer Betätigung des Betätigungselementes 28 wird die Reibungskupplung geöffnet oder ausgerückt, wobei die Anpressplatte 16 abhebt und die Kupplungsscheibe 40 im Wesentlichen klemmfrei ist. Diese Abhubsituation der Reibungskupplung ist in Fig. 2b dargestellt. Beim Ausrücken wird das Koppelelement 26 durch die in Richtung der anpressplatte 16 bewegten Tellerfederzungen 30 entlastet, wodurch der Energiespeicher 36 den Antriebshebel 20 in eine Ausgangslage zurück drängen kann, wobei die Antriebsklinke 54 im nächsten Zahngrund einrasten und die Spindel 12 zur Verschleißnachstellung verdrehen kann. Die Verschleißnachstellung erfolgt dabei im Wesentlichen ohne auf den Verstellring 46 wirkende Klemmkräfte. Ein zweiter Abstand in der Abhublage zwischen dem an dem ersten Schenkel 22 des Antriebshebels 20 angreifenden Koppelelementes 26 und der Anpressplatte 16 ist als Pfeil dargestellt, wobei der erste Abstand größer ist als der zweite Abstand, wobei die vorteilhafte Vergrößerung des Relativweges an dem Nachstellantrieb, insbesondere durch die radial innenseitige Koppelung des Betätigungselementes 28 mit dem Antriebshebel 20, erkennbar ist.

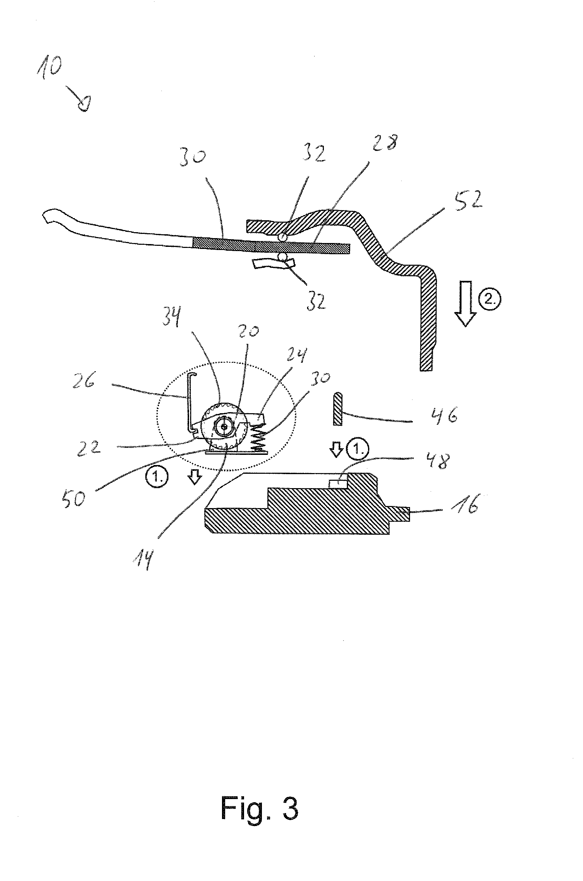

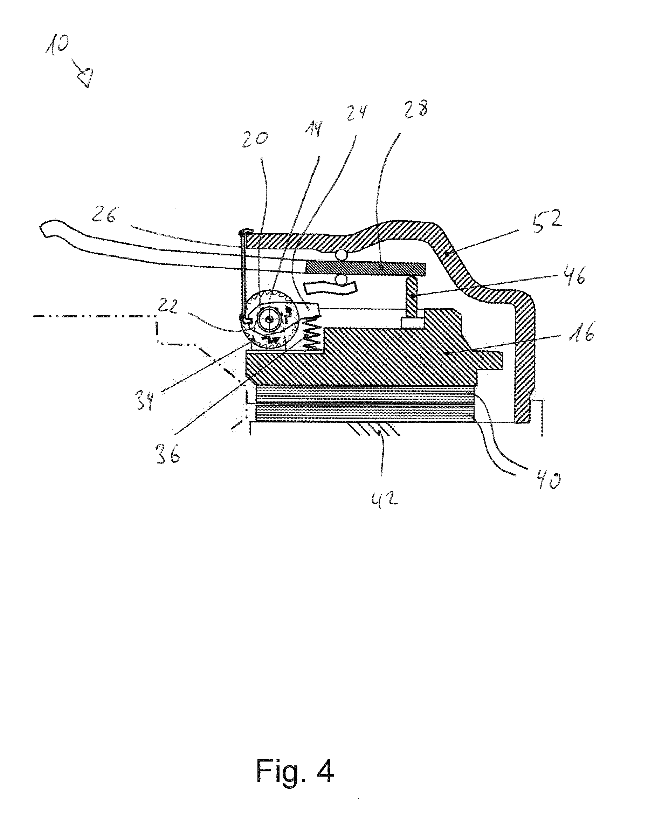

Eine vorteilhafte Montagefolge der Nachstelleinrichtung 10 ist in Fig. 3 gezeigt. Das Bereitstellen der Anpressplatte 16 mit den Gegenrampen 48, des Verstellringes 46, des Nachstellantriebes und eines Deckel-Unterzusammenbaus kann insbesondere in einem ersten Schritt erfolgen. Der Nachstellantrieb kann die Spindel 12 mit dem Ritzel 14, den Antriebshebel 20 und das Koppelement 26 umfassen. Der Deckel-Unterzusammenbau kann das an dem Kupplungsdeckel 52 vormontierte Betätigungselement 28 mit dessen Lagerung 32 umfassen. Die Montage des Verstellringes 46 und des Nachstellantriebes an der anpressplatte 16 kann gemeinsam in einem, insbesondere zweiten, Schritt erfolgen. Insbesondere anschließend, kann die Montage des Deckel-Unterzusammenbaus erfolgen. Das Verbinden des Koppelelementes 26 mit dem Betätigungselement 28 kann insbesondere abschließend erfolgen. In Fig. 4 ist ein alternativer Antrieb des Antriebshebels 20 dargestellt, wobei das Koppelelement 26 radial innenseitig an einer Öffnung des Kupplungsdeckels 52 angeordnet ist.

### Bezugszeichenliste

- 10: Nachstelleinrichtung
- 12: Spindel
- 14: Ritzel
- 16: Anpressplatte
- 18: Drehachse
- 20: Antriebshebel
- 22: erster Schenkel
- 24: zweiter Schenkel
- 26: Koppelelement
- 28: Betätigungselement
- 30: Tellerfederzunge
- 32: Lagerung
- 34: Umfangsverzahnung
- 36: Energiespeicher
- 38: Energiespeicher
- 40: Vorspanneinrichtung
- 42: Gegendruckplatte
- 44: Reibbelag
- 46: Verstellring
- 48: Gegenrampe
- 50: Spindelhalterung
- 52: Kupplungsdeckel
- 54: Antriebsklinke

## Patentansprüche

1. Nachstelleinrichtung für eine Reibungskupplung eines Kraftfahrzeugs, mit einem mit einer Spindel (12) verbundenem Ritzel (14) zur Nachstellung eines verschleißbedingten Fehlabstandes über einen Verstellring (46) und eine Gegenrampe (48) zwischen einer Gegendruckplatte (42) und einer relativ zu der Gegendruckplatte (42) bewegbaren Anpressplatte (16) zum Verpressen einer Kupplungsscheibe (40) zwischen der Anpressplatte (16) und der Gegendruckplatte (42), einem Betätigungselement (28) zum Bewegen der Anpressplatte (16) relativ zu der Gegendruckplatte (42), einem drehbar anpressplattenseitig angeordneten Antriebshebel (20), mit einer in das Ritzel (14) eingreifenden Antriebsklinke (54) zum Drehen des Ritzels (14), einer auf den Antriebshebel (20) wirkenden Vorspanneinrichtung (38) mit mindestens einem Energiespeicher (36) zum vorspannenden Verschwenken des Antriebshebels (20), **dadurch gekennzeichnet, dass**
ein mit dem Antriebshebel (20) und dem Betätigungselement (28) verbundenes Koppelelement (26) vorgesehen ist, wobei der Antriebshebel (20) über das Koppelelement (26) mit dem Betätigungselement (28) in Wirkverbindung bringbar ist.

2. Nachstelleinrichtung nach Anspruch 1, **dadurch gekennzeichnet, dass** das Koppelelement (26) radial innenseitig des Verstellringes (46) und/oder radial innenseitig einer Lagerung (32) des Betätigungselementes (28) angeordnet ist.

3. Nachstelleinrichtung nach Anspruch 1 oder 2, **dadurch gekennzeichnet, dass** zumindest der Antriebshebel (20) und die Spindel (12) radial innenseitig des Verstellringes (46) und/oder radial innenseitig der Lagerung (32) des Betätigungselementes (28) angeordnet sind.

4. Nachstelleinrichtung nach einem der vorherigen Ansprüche, **dadurch gekennzeichnet, dass** das Betätigungselement (28) eine Tellerfeder, insbesondere mit nach radial innen gerichteten Tellerfederzungen (30), ist.

5. Nachstelleinrichtung nach einem der vorherigen Ansprüche, **dadurch gekennzeichnet, dass** der Antriebshebel (20) einen ersten Schenkel (22) zur Kraftaufnahme einer von dem Koppelelement (26) aufgeprägten Kraft und einen mit der Antriebsklinke (54) und/oder der Vorspanneinrichtung (38) verbundenen zweiten Schenkel (24) aufweist.

6. Nachstelleinrichtung nach einem der vorherigen Ansprüche, **dadurch gekennzeichnet, dass** der Antriebshebel (20) an einer Spindelhalterung (50) der Spindel (12) gelagert ist.

7. Nachstelleinrichtung nach einem der vorherigen Ansprüche, **dadurch gekennzeichnet, dass** die Vorspanneinrichtung (38) eine Federeinrichtung mit mindestens einem Federelement als Energiespeicher (36) aufweist.

8. Nachstelleinrichtung nach Anspruch 7, **dadurch gekennzeichnet, dass** das mindestens eine Federelement eine Druckfeder ist

9. Nachstelleinrichtung nach einem der vorherigen Ansprüche, **dadurch gekennzeichnet, dass** eine Rückdrehsperre vorgesehen ist.

10. Reibungskupplung für ein Kraftfahrzeug, mit mindestens einer Nachstelleinrichtung (10) nach einem der Ansprüche 1 bis 9 zur Nachstellung eines verschleißbedingten Fehlabstands der Anpressplatte (16) zur Gegendruckplatte (42).

## Claims

1. Adjusting device for a friction clutch of a motor vehicle, having a pinion (14) which is connected to a spindle (12) for adjusting a wear-induced faulty spacing via an adjusting ring (46) and a counter-ramp (48) between a counterpressure plate (42) and a pressure plate (16) which can be moved relative to the counterpressure plate (42) in order to press a clutch plate (40) between the pressure plate (16) and the counterpressure plate (42), an actuating element (28) for moving the pressure plate (16) relative to the counterpressure plate (42), a drive lever (20) which is arranged so as to be rotatable on the pressure plate side, having a drive pawl (54) which engages into the pinion (14) in order to rotate the pinion (14), a prestressing device (38) which acts on the drive lever (20) with at least one energy store (36) for pivoting the drive lever (20) in a prestressing manner, **characterized in that** a coupling element (26) which is connected to the drive lever (20) and the actuating element (28) is provided, it being possible for the drive lever (20) to be brought into operative connection with the actuating element (28) via the coupling element (26).

2. Adjusting device according to Claim 1, **characterized in that** the coupling element (26) is arranged radially on the inner side of the adjusting ring (46) and/or radially on the inner side of a mounting (32) of the actuating element (28).

3. Adjusting device according to Claim 1 or 2, **characterized in that** at least the drive lever (20) and the spindle (12) are arranged radially on the inner side of the adjusting ring (46) and/or radially on the inner side of the mounting (32) of the actuating element (28).

4. Adjusting device according to one of the preceding claims, **characterized in that** the actuating element (28) is a disc spring, in particular with radially inwardly directed disc spring tongues (30).

5. Adjusting device according to one of the preceding claims, **characterized in that** the drive lever (20) has a first limb (22) for receiving a force which is applied by the coupling element (26) and a second limb (24) which is connected to the drive pawl (54) and/or the prestressing device (38).

6. Adjusting device according to one of the preceding claims, **characterized in that** the drive lever (20) is mounted on a spindle holder (50) of the spindle (12).

7. Adjusting device according to one of the preceding claims, **characterized in that** the prestressing device (38) has a spring device with at least one spring element as energy store (36).

8. Adjusting device according to Claim 7, **characterized in that** the at least one spring element is a compression spring.

9. Adjusting device according to one of the preceding claims, **characterized in that** a ratchet lock is provided.

10. Friction clutch for a motor vehicle, having at least one adjusting device (10) according to one of Claims 1 to 9 for adjusting a wear-induced faulty spacing of the pressure plate (16) from the counterpressure plate (42).

## Revendications

1. Dispositif de compensation pour un embrayage à friction d'un véhicule automobile, comprenant un pignon (14) relié à une broche (12) pour la compensation d'une distance d'erreur provoquée par une usure par le biais d'une bague de réglage (46) et d'une rampe conjuguée (48) entre un plateau de contre-pression (42) et un plateau de pressage (16) déplaçable par rapport au plateau de contre-pression (42) pour presser un disque d'embrayage (40) entre le plateau de pressage (16) et le plateau de contre-pression (42), un élément d'actionnement (28) pour déplacer le plateau de pressage (16) par rapport au plateau de contre-pression (42), un levier d'entraînement (20) disposé de manière rotative du côté du plateau de pressage, comprenant un cliquet d'entraînement (54) venant en prise dans le pignon (14) pour faire tourner le pignon (14), un dispositif de précontrainte (38) agissant sur le levier d'entraînement (20), comprenant un accumulateur d'énergie (36) pour le pivotement de manière précontrainte du levier d'entraînement (20), **caractérisé en ce**
**qu'**un élément d'accouplement (26) relié au levier d'entraînement (20) et à l'élément d'actionnement (28) est prévu, le levier d'entraînement (20) pouvant être amené en liaison fonctionnelle avec l'élément d'actionnement (28) par le biais de l'élément d'accouplement (26).

2. Dispositif de compensation selon la revendication 1, **caractérisé en ce que** l'élément d'accouplement (26) est disposé radialement sur le côté intérieur de la bague de réglage (46) et/ou radialement sur le côté intérieur d'un support sur palier (32) de l'élément d'actionnement (28).

3. Dispositif de.compensation selon la revendication 1 ou 2, **caractérisé en ce qu'**au moins le levier d'entraînement (20) et la broche (12) sont disposés radialement sur le côté intérieur de la bague de réglage (46) et/ou radialement sur le côté intérieur du support sur palier (32) de l'élément d'actionnement (28).

4. Dispositif de compensation selon l'une quelconque des revendications précédentes, **caractérisé en ce que** l'élément d'actionnement (28) est un ressort Belleville, en particulier comprenant des languettes de ressort Belleville (30) tournées radialement vers l'intérieur.

5. Dispositif de compensation selon l'une quelconque des revendications précédentes, **caractérisé en ce que** le levier d'entraînement (20) comprend une première branche (22) pour la réception de force d'une force exercée par l'élément d'accouplement (26) et une deuxième branche (24) reliée au cliquet d'entraînement (54) et/ou au dispositif de précontrainte (38).

6. Dispositif de compensation selon l'une quelconque des revendications précédentes, **caractérisé en ce que** le levier d'entraînement (20) est monté sur un support de broche (50) de la broche (12).

7. Dispositif de compensation selon l'une quelconque des revendications précédentes, **caractérisé en ce que** le dispositif de précontrainte (38) comprend un dispositif à ressort comprenant au moins un élément ressort en tant qu'accumulateur d'énergie (36).

8. Dispositif de compensation selon la revendication 7, **caractérisé en ce que** l'au moins un élément ressort est un ressort de compression.

9. Dispositif de compensation selon l'une quelconque des revendications précédentes, **caractérisé en ce qu'**un blocage de rotation inverse est prévu.

10. Embrayage à friction pour un véhicule automobile, comprenant au moins un dispositif de compensation (10) selon l'une quelconque des revendications 1 à 9 pour la compensation d'une distance d'erreur, provoquée par une usure, du plateau de pressage (16) par rapport au plateau de contre-pression (42).
